# EUROPEAN PATENT APPLICATION

(11) **EP 4 339 731 A1**
(43) Date of publication of application: **20.03.2024**
(21) Application number: 22382858.3
(22) Date of filing: 16.09.2022
(51) Int. Cl.: G05D 1/10

(54) **UNMANNED AERIAL VEHICLES**

(71) Applicant: Linking Drones SL, 28030 Madrid (ES)
(72) Inventor: NUÑEZ FERNANDEZ, Alberto, 28030 Madrid (ES); HILARIO SERRANO, Eduardo, 28030 Madrid (ES); SERRANO MONTERO, Cesar, 8907 Wettswil (CH)
(74) Representative: de Rooij, Mathieu Julien

(57) **Abstract**

The present disclosure relates to an unmanned aerial vehicle comprising a plurality of vehicle actuators, a control system including a processor and a memory, and a physical user interface connected to the control system. The control system is configured to store flight plan instructions in the memory. Further, the flight plan instructions, when executed by the processor, cause control signals to be sent to the vehicle actuators to carry out a flight plan. Additionally, the physical user interphase comprises a control unit, and the activation of the control element by a user causes the processor to execute at least a portion of the flight plan instructions corresponding to at least a segment of the flight plan. The present disclosure further relates to methods for operating unmanned aerial vehicles.

## Description

The present disclosure relates to unmanned aerial vehicles. More specifically, the present disclosure relates to unmanned aerial vehicles comprising a physical user interface connected to a control system of the vehicle. The present disclosure further relates to methods for operating unmanned aerial vehicles.

### BACKGROUND

Unmanned aerial vehicles (UAVs) have been used over the last decades for a wide range of applications, such as in military operations, delivery services, search and rescue tasks, and aerial photography among others.

UAV developers and manufacturers have developed systems and methods to automate a return home flight of the vehicle, e.g. when a certain operational condition occurs. Thus, UAVs are generally configured to return to a predefined location with minimal to no impact on their surroundings. Some of the conditions that may occur for a UAV to trigger a return home flight are low battery, failure or malfunctioning of a flight actuator, poor radio signal, or a direct request by a UAV operator. This also reduces the risk of losing control of the vehicle and the risk of vehicle crash.

UAVs are generally controlled during flight by either a pilot or by a remote control station sending relevant operational commands to the UAV's control system. This limits the operational range of UAVs to those areas in which communication (e.g. radio communication or 4G) with the pilot or remote control station can be established. In order to provide further operational possibilities, UAVs may be programmed to execute a flight to a specified destination in which at least part of the flight may be carried out autonomously, i.e. without communication. After landing at the destination though, in order to return to a base station or carry out a further flight, communication with the pilot or remote control station needs to be established again.

The present disclosure aims to provide improvements in the design and configuration of UAVs offering additional operational possibilities for UAVs.

### SUMMARY

In a first aspect, an unmanned aerial vehicle is provided. The unmanned aerial vehicle comprises a plurality of vehicle actuators, a control system including a processor and a memory, and a physical user interface including a control element. The control system is configured to store flight plan instructions in the memory. Further, the flight plan instructions, when executed by the processor, cause control signals to be sent to the vehicle actuators to carry out a flight plan. Additionally, the physical user interface is connected to the control system, in such a manner that the activation of the control element by a user causes the processor to execute at least a portion of the flight plan instructions corresponding to at least a segment of the flight plan.

In accordance with this aspect, a vehicle suitable for executing at least a portion of a flight plan upon receiving a physical command from a user is provided. The user is enabled to trigger at least a subsequent portion of the flight plan, i.e. a portion of a flight plan which has been stored in the UAV's memory but has not been executed yet. More precisely, the command from the user may be transmitted to the UAV through a very simple physical interaction. Thus, the user does not require any secondary device to send the command to the UAV, and it does not require interaction with the UAV using a particular communication protocol. Executing of the portion of the flight plan can thus be triggered by the user in the absence of any internet connection, Wi-Fi, WLAN, radio network etc. The UAV is enabled to do so since the flight plan instructions including the portion to be executed have been stored previously in the memory of the UAV.

The UAV according to this aspect allows drone delivery in a simple and reliable manner. The users of the UAV are not required to provide any technical input to the vehicle, since the route and commands to execute the same can be pre-programmed in the UAV. Thus, inexperienced users may be comfortable using this vehicle considering they will not be responsible for understanding and assigning the flight route of the vehicle.

Throughout the present disclosure, a "flight plan" may include information such as departure and arrival locations, waypoints, estimated time on route, travel speed, alternative landing locations in case of unexpected flight conditions, type of flight and type of payload among others.

Also, throughout the present disclosure, "flight plan instructions" may be understood as the commands stored in a memory of the vehicle and that may be read and executed by a processor of the vehicle to carry out the flight plan.

Throughout the present disclosure, a "flight segment" may be understood to mean a flight including take-off from a starting location and arriving or landing at a destination. The destination may be an end destination or an intermediate destination. That is, a complete flight plan for a time period or for the duration of a battery charge may include one or more flight segments. In particular, a flight plan may include at least a first flight segment from a base or home location to a first destination, and a second flight segment from the first destination returning to the base location. A flight plan may also include a first flight segment from a base location to a first destination, a number of intermediate flight segments from the first destinations to second and subsequent destinations, and a final flight segment from the second destination returning to the base location.

In the present disclosure, a "physical user interface" may be defined as a point of direct physical interaction of a user with the vehicle. The physical user interface of the present disclosure includes a control element which may comprise one or more buttons, or switches, a tactile display, an element within the tactile display, a proximity sensor or any other control element which allows a user to trigger execution of a portion of a flight plan.

Throughout the present disclosure, "vehicle actuator" may be understood to refer to any sort of actuator, component or machine that determines the flight of the vehicle. Depending on the configuration of the UAV, the vehicle actuators may include propellers, ducted fans, rotors, control surfaces (ailerons, rudder, flaps, slats or other), servos, and may rely on different energy sources or drives, e.g. electric, pneumatic, or hydraulic.

In examples, the activation of the control element requires a single action. Thus, the user only requires performing a single interaction with the UAV, reducing the complexity of the task even further. This may be particularly relevant when the user is not versed in technology, or in other situations such as when the user has little time to activate the control element, or when the visibility around the UAV is poor. In addition, the simplicity of the interaction assures that the user may not deliberately or accidentally change the flight plan of the vehicle. Thus, the vehicle provided can execute at least a subsequent portion of the flight plan without the user being participant of the flight plan. In fact, the user does not need to even know the next destination of the UAV, which provides privacy to other users of the UAV.

In other examples, the user may need to perform a conscious interaction with the control element to activate it. For example, the control element may only be activated after a persistent or repetitive action of the user. More precisely, in some examples, the control element may be activated only after the user keeps an activation request for a minimum period of time, e.g. the user presses a push-button for 3 seconds.

In further examples, the control element may be activated after the user interacts with the control element several times within a period of time, e.g. two times within a second. This type of user-UAV interaction reduces the risk of an involuntary activation of the control element by a user.

In some examples, activation of the control element by a user causes the processor to execute at least a portion of the flight plan instructions with a delay. In examples, after the activation of the control element, the UAV may emit a warning signal alerting of the imminent takeoff. The warning signal may comprise a visual signal, an audio signal or a combination of them. Further, the warning signal may be sufficiently clear to alert any person around the UAV about the imminent takeoff. In some examples, the warning signal may last for a few seconds, e.g. 5 seconds, before the UAV starts the takeoff stage.

In examples, a further interaction between the user and the control element while the UAV is emitting the takeoff warning signal may cause the UAV to abort the execution of the flight plan.

In some examples, user authentication may be required to activate the control element such that only authorized users can request the execution of a subsequent portion of a flight plan. User authentication may include any type of suitable identification methods, such as e.g. a combination of password and username, a fingerprint, an iris scanner, RFID or others.

In further examples, the flight plan comprises a first flight segment and a second flight segment. Further, once the first flight segment has been completed, the activation of the control element may cause the processor to execute a portion of the flight plan instructions corresponding to the second flight segment. This provides a UAV with the capability of executing a first flight segment, e.g. flying to a first location (e.g. delivering or collecting a payload, such as a consumer good), and waiting until a user activates the control element to fly to a different location. In this regard, the vehicle may be semi-autonomous, only requiring an intermediate command from a user to complete a flight plan.

In examples, the UAV may comprise a sensing unit configured to record at least one parameter while carrying out at least the first flight segment. Additionally, the processor may be configured to modify a portion of the flight plan instructions associated with the second flight segment according to the recorded at least one parameter. This may allow adapting the flight plan according to unexpected situations, such as a change in weather conditions, remaining operational range of the vehicle or others. When the user interacts with the UAV after completion of the first flight segment, he/she does not know or even need to know that flight plan instructions have been changed autonomously by the UAV. All the user does is trigger the execution of the next flight segment and he/she can count on the next flight segment being executed.

In examples, the vehicle may be configured to transport a payload. Further, the vehicle may be configured to transport the payload at least partially inside an interior space of the vehicle. Therefore, the payload may be at least partially hidden by the vehicle and the aerodynamic performance of the vehicle may not be compromised. For delivery of goods to remote areas, examples of the present disclosure can provide specific advantages in that goods can be delivered to inexperienced users of laymen and after delivery of a good, only a simple physical interaction with the UAV is required for even the inexperienced user to allow the UAV to continue on its flight plan. Furthermore, the UAV may, for example, follow a delivery circuit, waiting for the physical interaction with the user at consecutive landing locations, and repeating the same circuit multiple times.

In examples, the activation of the control element by a user may cause the vehicle to fly to a base or "home" location. Thus, a user may e.g. collect a parcel from the vehicle delivered to his/her home or other preferred location, and subsequently activate the control element. Then, the vehicle may fly to a base location wherein dedicated personnel may manage the vehicle, e.g. load a new payload in the vehicle, inspect the vehicle, and program a new flight plan to be executed.

In some examples, the vehicle, before executing at least a portion of the flight plan instructions, may be configured to verify whether it has sufficient remaining operational range to perform at least the associated segment of the flight plan. Further, in examples, the processor may be configured to modify at least a portion of the flight plan instructions to reach a destination location, if the remaining operational range is not sufficient to complete the associated segment of the flight plan executing the stored portion of the flight plan instructions. Furthermore, according to the remaining operational range, intermediate segments of the flight plan may be skipped to reach a destination location.

In a further aspect of the present disclosure, a method for operating an unmanned aerial vehicle is provided. The method comprises loading a flight plan into a memory of the vehicle and executing a first segment of the flight plan. The method also comprises receiving a user input through a physical user interface after executing the first segment. Then, in response to the user input, the method comprises initiating at least a further segment of the flight plan.

According to this aspect, the method provided allows operating a UAV and completing a flight plan with intermediate user interaction. The fact that the method includes a user input as an initiation command for a further segment of the flight plan allows verifying through a user that the flight plan progresses adequately, i.e. that the vehicle has reached a destination point, and also permits a user to perform a number of intermediate tasks on the device, e.g. load or pick a payload, replace the battery, or check the remaining operational range of the vehicle among others.

Further, since a physical user interface is used, a user can trigger the execution of the next flight segment without the need for any communication network.

Also, since the flight plan has previously been stored in the memory of the UAV, the user does not need to determine a future flight plan or even determine or know, the next destination of the UAV.

In examples, executing at least a segment of the flight plan is carried out autonomously by the vehicle. More precisely, each segment of the flight plan after receiving a user input may be carried out by the vehicle in complete independence from a remote control station or any user. This simplifies the task of the user and the complexity of the operations, since it does not require any knowledge about previous/future flight segments of the vehicle or other control parameters.

The term "remote control station" as used throughout the present disclosure may be regarded as a set of hardware and software that communicates with and controls a UAV, either by setting parameters for autonomous operation or by allowing direct control of the UAV. The communication with the UAV may take place at any frequency rate, e.g. continuous or on demand. A control station may comprise ground-based hardware (a "ground station") and/or aerial hardware, and the software may be implemented on-site or may be implemented in another location, e.g.at least partially located in a cloud server.

### BRIEF DESCRIPTION OF THE DRAWINGS

Non-limiting examples of the present disclosure will be described in the following, with reference to the appended figures, in which:
Figure 1 schematically illustrates a perspective top view of an example of an unmanned aerial vehicle according to the present disclosure.
Figure 2 schematically illustrates a perspective side view of another example according to the present disclosure of an unmanned aerial vehicle on the ground.
Figure 3 schematically illustrates a perspective side view of yet another example according to the present disclosure of an unmanned aerial vehicle on the ground.
Figure 4 schematically illustrates a top view of yet a further example of an unmanned aerial vehicle according to the present disclosure.
Figure 5 shows a flowchart of an example of a method to operate an unmanned aerial vehicle.

The figures refer to example implementations and are only be used as an aid for understanding the claimed subject matter, not for limiting it in any sense.

### DETAILED DESCRIPTION OF EXAMPLES

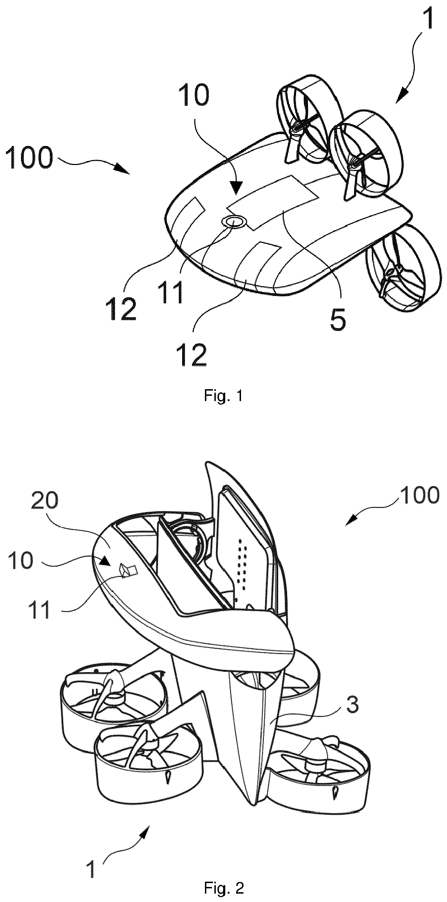

Figure 1 schematically illustrates a perspective top view of an example of an unmanned aerial vehicle 100 according to the present disclosure. The aerial vehicle 100 is configured to transport a payload (not illustrated). The vehicle 100 comprises a main lifting body having a substantially airfoil shaped cross-section.

The main lifting body extends laterally from a first tip to a second tip and has a pressure side and a suction side. The main lifting body is configured to store the payload in an interior space of the main lifting body. Further, the vehicle 100 comprises a propulsion assembly coupled to the main lifting body. The propulsion assembly comprises two central rotors located at the suction side and two lateral rotors located at the pressure side.

Additionally, the lateral rotors are located closer to the respective tip than the central rotors.

The unmanned aerial vehicle 100 thus comprises a plurality of (ducted) rotors which are vehicle actuators 1 for this UAV.

Further, the UAV comprises a control system 5 including a processor and a memory, and a physical user interface 10 connected to the control system 5. The control system 5 is configured to store flight plan instructions in the memory. The flight plan instructions, when executed by the processor, cause control signals to be sent to the vehicle actuators 1 to carry out a flight plan. In this case, control signals may be sent to the individual ducted rotors to fly the UAV.

The physical user interface 10 includes a control element 11. The activation of the control element 11 by a user causes the processor to execute at least a portion of the flight plan instructions corresponding to at least a segment of the flight plan.

The physical user interface 10 may be connected to the control system in any suitable manner (mechanically, wireless, or otherwise) which allows the control system to execute flight plan instructions in response to user interaction. The interaction with users occurs on the ground, i.e. it does not take place during flight, and it is not auto-triggered by the UAV.

As previously discussed, an unmanned aerial vehicle 100 suitable for executing at least a portion of a flight plan upon receiving a command from a user is provided. In the illustrated example, the control element 11 is a push-button, the activation of the control element 11 only requires pressing the push-button.

Thus, triggering the execution of the next portion of a flight plan may be as simple as a push of a button. The user does not require any secondary device to send the command to the UAV, and it does not require interaction with the UAV using a particular communication protocol. The configuration of the vehicle 100 provided ensures that the user may not deliberately or accidentally change the flight plan of the vehicle 100. In addition, the vehicle 100 provided can execute at least a subsequent portion of the flight plan without the user being aware of the flight plan. This may be particularly convenient when the person assigning the flight plan to the vehicle 100 does not want to share any data stored in the flight plan with the user, e.g. in a delivery of a commercial payload.

In the illustrated example, the activation of the control element 11 requires only a single action, which makes it particularly easy-to-use and user-friendly. In examples, the control element 11 or other part of the UAV may comprise a light indication representative of the state of the vehicle. For example, the light indication may change color when the vehicle is waiting for the activation of the control element by the user and may change color again indicating that a user has correctly triggered the execution of the subsequent portion of the flight plan so that the user receives confirmation that his/her input has been registered.

In examples, the control element 11 may require deliberate and/or persistent user interaction to activate it. For example, the control element 11 may only be activated after a persistent or repetitive action of the user. One possible way to implement this is that the control element 11 is activated only after the user keeps an activation request for a period of time, e.g. the user presses the push-button 11 for at least 3 seconds. In other examples, the control element 11 may be activated only after the user interacts with the control element 11 two or more times within a period of time. This reduces the risk of an involuntary activation of the control element 11 by a user.

In some examples, after the activation of the control element 11, the UAV may emit a warning signal alerting of the imminent takeoff. That is, triggering of the next flight segment may not occur after a predetermined delay. A warning signal may include an audio signal (e.g. one or more "beeps"), a visual signal (flashing of light(s), or changing of light color), or a combination of both. Any other suitable warning signal to warn the user and/or bystanders of the imminent takeoff may be used. The warning signal may last for a few seconds, e.g. 5 seconds, before the UAV starts the takeoff stage.

In examples, a further interaction between the user and the control element 11 while the UAV is emitting the takeoff warning signal may cause the UAV to abort the execution of the flight plan. The physical user display may include a further control element, e.g. a cancelation or abort button. In some examples, the same control element may be used to cancel the takeoff.

In further examples, the physical user interface 10 may comprise more than one control element 11. For example, the physical user interface 10 may comprise several control elements 11, each of them dedicated to control a different functionality.

In the example of figure 1, the flight plan of vehicle 100 may comprise a first flight segment and at least a second flight segment. Further, after the first flight segment has been completed, the activation of the control element 11 causes the processor to execute a portion of the flight plan instructions corresponding to the second flight segment. That is, before taking off and performing a first flight segment, the second flight segment (and optionally further flight segments) has already been determined and stored in the memory. The control system is configured to execute the first flight segment, and to delay the execution of the second flight segment until a user activates the control element in the physical user interface.

In other examples the activation of the control element 11 may cause the processor to execute a portion of the flight plan instructions corresponding to the first flight segment. Therefore, the vehicle 100 may be pre-programmed with a flight plan and then, e.g. after a payload is loaded in the vehicle 100, a user may activate the control element 11 to execute a first flight segment. Thus, the vehicle 100 may carry out the first flight segment and wait until receiving a second activation of the control element 11. This process may be repeated for any number of flight segments.

In the illustrated example, the vehicle 100 may comprise one or more sensing units 12. The sensing unit(s) 12 may be configured to record at least one parameter while carrying out the first flight segment. Further, the processor may be configured to modify a portion of the flight plan instructions associated with the second flight segment according to the recorded at least one parameter. For example, the sensing unit 12 may record any atmospheric parameter, e.g. wind velocity during a first flight segment, turbulence or air density and then, if the processor establishes that this parameter deviates significantly from a predetermined value or value range, the processor may modify a portion of the flight plan instructions associated with the second flight segment (and subsequent flight segment), e.g. by not flying through the zone of high winds. Any other atmospheric parameter may be recorded and used to modify the instructions associated with the second flight segment. Further, the sensing unit(s) 12 may locate obstacles and generate a virtual no-fly-zone that may help the processor modify flight plan instructions.

Figure 2 schematically illustrates a lateral view of another example of an unmanned aerial vehicle according to the present disclosure. The vehicle 100 in figure 2 is illustrated on the ground. The configuration of the UAV and the vehicle actuators (ducted rotors) are generally the same or similar to the example of figure 1. The vehicle 100 comprises a main body 3, which is a lifting body in this case, where the physical user interface 10 is located.

The vehicle 100 in the example is configured to transport a payload, such as e.g. a consumer good (not illustrated). In fact, the vehicle 100 comprises a openable lid 20 that gives access to an interior space where the payload may be stored. In this example, the openable lid 20 is pivotable and may also give access to other components of the vehicle 100, such as a battery that could be replaced by the user before activating the control element 11.

Since the main lifting body 3 of the vehicle 100 is not configured to contact the ground or the surroundings, locating the physical user interface in the main lifting body 3 of the vehicle 100 in this example may protect this component against accidental activations. Further, the physical user interface 10 may be configured to operate at severe atmospheric conditions, e.g. heavy rain, extreme temperatures, and in the presence of sand or other particles among others.

The vehicle 100 may be configured to have the physical user interface available only when the openable lid 20 is closed. Thus, in the configuration illustrated in figure 2, a user cannot successfully activate the control element 11. Note that the control element 11 may be of any suitable type or shape. Examples of such control elements are toggle switches, rotary switches, limit switches, and slide switches among others. The physical user interface may be located in other parts of the main body different from the openable lid 20 (see for example figure 1).

In some examples, a user interface may include a touch display. The display may include one or more control elements such as a "return to home" button or "execute next flight" button. In some examples, the touch display may include a menu structure, which additionally allows a user to indicate that a payload has been introduced into the main body. In examples, the touch display may additionally provide the option of introducing the type of payload that has been introduced into the vehicle, and/or its dimensions, approximate weight etc. The control system may be configured to take these data into account for subsequent flight segments.

In certain examples, the physical user interface includes only a single element, a touch display with a single option or a single switch or a single switch-button. Such a physical user interface with only a single control element is not only easier to implement but may also make the interaction with the user easier and reduce the possibilities of user-induced errors. In examples, to further simplify user interaction, only a single action, e.g. a single click, a single push, a single touch is required to trigger execution of the next flight segment.

As mentioned before, in further examples, the physical user interface 10 may comprise more than one control element 11. For example, the physical user interface 10 may comprise several control elements 11, each of them dedicated to control a different functionality. The control elements 11 may trigger the opening of a lid where the payload is stored or may be associated with different destination locations.

Further, the physical user interface 10 may be linked to a mobile App, which may provide more options to the user, e.g. selecting different routes or destinations, opening a lid of the vehicle for payload manipulation, reporting the remaining operational range of the vehicle, or others.

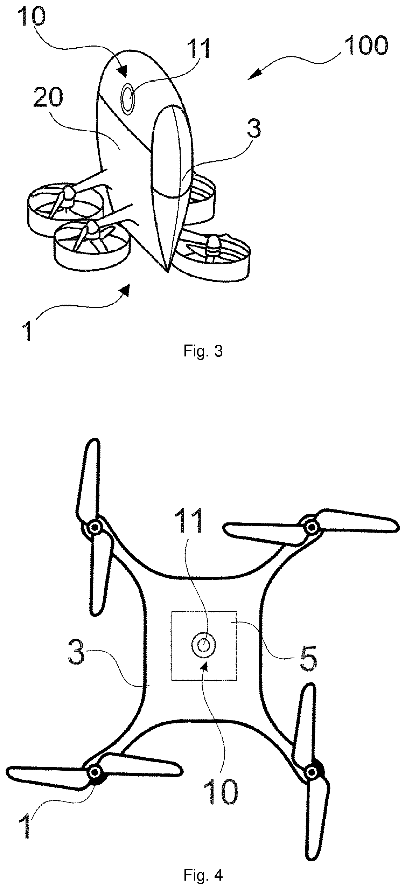

Figure 3 schematically illustrates a lateral view of yet another example of an unmanned aerial vehicle 100 according to the present disclosure. As in figure 2, the vehicle 100 is illustrated on the ground. Further, figure 3 also shows that the physical user interface 10 may be located in the main body 3 (which in this case is again a lifting body), and more precisely in the nose of the main body. Further, in this example, the vehicle 100 comprises an openable lid 20 located at a rear part of the main body 3.

The control system of the vehicle 100 of the example in figure 3 may generally be configured similarly to the example of figure 2. In an example, the control system of the vehicle 100 is configured to verify whether the UAV has the sufficient remaining operational range to perform at least a segment of the flight plan. The vehicle 100 may carry out said verification prior to executing the associated portion of the flight plan instructions. In some cases, said verification may include carrying out a pre-flight check. Further, any parameter recorded by the sensing unit 12 may be used to estimate a battery consumption during the segment of the flight plan.

Additionally, the vehicle in figure 3 may comprise a processor configured to modify at least a portion of the flight plan instructions. This modification may be performed to reach a destination location if, executing the stored portion of the flight plan instructions, the remaining operational range is not sufficient to complete the associated segment of the flight plan. Thus, in some cases, the processor may override some of the flight plan instructions to carry out a different flight plan or to stay on ground.

Figure 4 schematically illustrates a top view of yet a further example of an unmanned aerial vehicle 100 according to the present disclosure. The example in figure 4 shows a different distribution of vehicle actuators 1 around the main body 3. The UAV of figure 4 has a more classic quadcopter configuration. UAVs with a quadcopter configuration are well known and have many military, commercial and private applications. The vehicle actuators in this example include the four rotors.

In this example, the physical user interface is located in a central location on the upper side of the main body 3. Further, in the illustrated example, the unmanned aerial vehicle 100 may be configured for reconnaissance, imaging or monitoring tasks, or others. Examples of such drones may be used e.g. for monitoring agriculture, inspection of industrial infrastructure such as wind turbines or others.

Yet in other examples, such quadcopter UAV's may be configured to transport a payload held on the underside of the main body. The payload may be held by actuators such as clamps or by passive elements such as elastic straps. It should be noted, however, that the physical user interface and related functions may be incorporated in UAV's having widely varying (military or non-military) objectives.

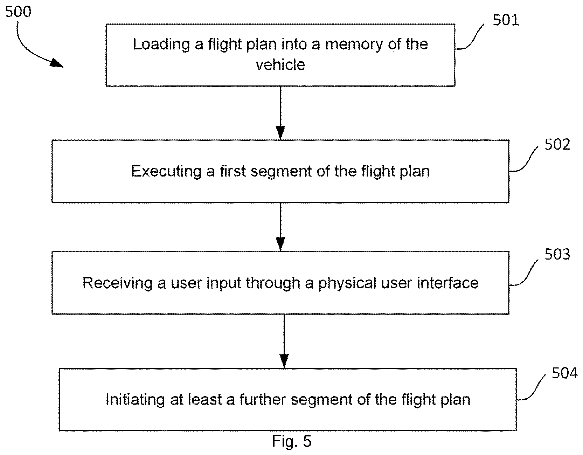

Figure 5 shows a flowchart of an example of a method 500 to operate an unmanned aerial vehicle 100. The method 500 comprises, at block 501, loading a flight plan into a memory of the vehicle 100. As discussed earlier, the flight plan may include a plurality of flight segments which are to be carried out during a time period or until power supply (battery or battery pack) runs out.

Further, at block 502, the method 500 comprises executing a first segment of the flight plan. Then, the method 500 includes, at block 503, receiving a user input through a physical user interface 10 after executing the first segment. Additionally, the method 500 also comprises, at block 504, initiating at least a further segment of the flight plan in response to the user input.

According to this aspect, the method 500 provided allows operating a UAV 100 and completing a flight plan with intermediate user interaction. The fact that the method 500 includes receiving 503 a user input through a physical user interface 10 as an initiation command for a further segment of the flight plan allows verifying through a user that the flight plan progresses adequately. Further, the method 500 allows operating a UAV 100 in a semi-autonomous manner, i.e. the UAV may perform a first segment of the flight plan autonomously and wait for a user interaction before initiating a further segment of the flight plan, which may also be carried out autonomously.

Further, the method 500 may be used for aerial delivery. In some examples, the vehicle 100 may comprise a payload and the first segment of the flight plan may finalize in a payload delivery location. When the flight plan is determined, it is beneficial if the type of payload and particularly its weight are known beforehand.

The user may collect the payload and interact with the vehicle 100 through the physical user interface 10, e.g. pressing a push-button. Then, in response to the user input, the vehicle 100 may initiate a second segment of the flight plan to e.g. return to a base location where another delivery may be programmed.

Thus, the flight plan and associated route(s) may be pre-programmed before the vehicle 100 starts the first segment of the flight plan, and the vehicle may simply initiate a precalculated route in response to the user input. The routes in the flight plan may comprise a return trip, i.e. an outbound segment and an inbound segment, or consecutive routes defining for example a circular trip, e.g. from point A to point B, from point B to point C, and from point C to point A. Any other number of intermediate points and type of route can also be implemented.

In other examples, the method 500 may serve as a pick-up method, i.e. after executing a first segment of the flight plan, the user may load a payload in the vehicle 100 before interacting with the vehicle 100 through the physical user interface. Then, in response to the user input, the vehicle 100 may initiate a second segment of the flight plan. This may be used, for example, to return a purchased item. Thus, the user may return the item to the seller without knowing the location of the seller's storage facility, the provider or the origin of the item. Also in this example, the original flight plan including the first and second flight segments may take into account the payload that will be carried by the UAV after the first flight segment.

In further examples, the method 500 may comprise recording at least one flying parameter or atmospheric parameter while executing at least the first segment of the flight plan. Additionally, the method 500 may comprise modifying the further segment of the flight plan according to the recorded parameter.

Thus, continuing with the example above, a vehicle may execute a first segment of the flight plan to reach a pick-up location while recording the wind speed and wind turbulence. Then, if any of the recorded parameters is above a maximum threshold in a particular geographical zone, the vehicle 100, after receiving a user input may modify the second flight segment to avoid said geographical zone associated with said parameters.

In examples, the method may comprise verifying whether it has the sufficient remaining operational range to carry out a segment of the flight plan. Further, if the remaining operational range is not sufficient to complete the segment, the method comprises modifying at least a portion of the loaded flight plan to reach a destination location.

Any portion of the flight plan may be modified following multiple approaches. For example, the flight plan may be modified so that the vehicle describes the same route but at a lower velocity. Additionally, the flight plan may be modified so that the vehicle follows a different route, e.g. a route avoiding geographical zones associated with high wind speeds or high turbulence (that may require more power to fly through) or a shorter route.

Additionally, the method 500 may comprise modifying the destination location in the loaded flight plan to reach an alternative destination. A collection of alternative destinations may be included in the memory of the vehicle for this and other purposes. In other examples, the vehicle 100 may establish a connection with a remote control station to request new instructions, e.g. a different alternative destination.

Additionally or alternatively, the UAV may be configured to indicate to the user that (given the payload and the flight segment to be performed) the remaining operational range is not sufficient, and the flight will not be carried out.

All technical features of the examples illustrated may be integrated into an unmanned aerial vehicle according to the present disclosure. The unmanned aerial vehicle may be supervised or at least partially controlled from a remote control station via a pilot or an automatic control unit. In further examples, the unmanned aerial vehicle may be semi-autonomous, i.e. the unmanned aerial vehicle may not require contact with a remote control station during flight and may only require the activation of the control element by a user.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples but should be determined only by a fair reading of the claims that follow.

## Claims

1. An unmanned aerial vehicle comprising:
a plurality of vehicle actuators;
a control system including a processor and a memory, the control system being configured to store flight plan instructions in the memory, wherein the flight plan instructions, when executed by the processor, cause control signals to be sent to the vehicle actuators to carry out a flight plan;
a physical user interface connected to the control system, and including a control element, wherein
activation of the control element by a user causes the processor to execute at least a portion of the flight plan instructions corresponding to at least a segment of the flight plan.

2. The vehicle of claim 1, wherein the physical user interface includes only a single control element and/or wherein activation of the control element requires a single action.

3. The vehicle of claim 1 or 2, wherein the control element is a push-button.

4. The vehicle of any of claims 1 - 3, wherein the flight plan comprises a first flight segment and a second flight segment, and wherein, after the first flight segment has been completed, the activation of the control element causes the processor to execute a portion of the flight plan instructions corresponding to the second flight segment.

5. The vehicle of claim 4, further comprising a sensing unit configured to record at least one parameter while carrying out the first flight segment, and wherein the processor is configured to modify a portion of the flight plan instructions associated with the second flight segment according to the recorded at least one parameter.

6. The vehicle of any of claims 1 - 5, wherein the vehicle is further configured to transport a payload.

7. The vehicle of any of claim 1 - 6, wherein activation of the control element by a user causes the vehicle to fly to a base location.

8. The vehicle of any of claims 1 - 7, wherein the vehicle further comprises a main body including the physical user interface.

9. The vehicle of any of claims 1 - 8, wherein the vehicle, before executing at least a portion of the flight plan instructions, is configured to verify whether it has sufficient remaining operational range to perform at least an associated segment of the flight plan.

10. The vehicle of claim 9, wherein the processor is configured to modify at least a portion of the flight plan instructions to reach a destination location if the remaining operational range is not sufficient to complete the associated segment of the flight plan executing an stored portion of the flight plan instructions.

11. A method for operating an unmanned aerial vehicle, the method comprising:
loading a flight plan into a memory of the vehicle;
executing a first segment of the flight plan;
receiving a user input through a physical user interface incorporated in the unmanned aerial vehicle after executing the first segment; and
in response to the user input, initiating at least a further segment of the flight plan.

12. The method of claim 11, wherein the vehicle executes at least a segment of the flight plan autonomously.

13. The method of any of claims 11 and 12, wherein the first segment of the flight plan ends in a payload delivery location or in a payload pick up location.

14. The method of any of claims 11 - 13, further comprising:
recording at least one flying parameter or atmospheric parameter while executing the first segment of the flight plan, and
autonomously modifying the further segment of the flight plan according to the recorded parameter.

15. The method of any of claims 11 - 14, wherein before executing at least a segment of the flight plan, the method further comprises:
verifying whether the unmanned aerial vehicle has sufficient remaining operational range to carry out the segment of the flight plan, and if the remaining operational range is not sufficient to complete the segment,
modifying at least a portion of the loaded flight plan to reach a destination location.
